# EUROPÄISCHE PATENTANMELDUNG

(11) **EP 2 657 479 A1**
(43) Veröffentlichungstag der Anmeldung: **30.10.2013**
(21) Anmeldenummer: 13001508.4
(22) Anmeldetag: 25.03.2013
(51) Int. Cl.: F02B 19/08, F02B 19/12, F02B 43/00

(54) **Zylinderkopf für eine Brennkraftmaschine**

(30) Priorität: 06.04.2012 AT 4152012
(71) Anmelder: GE Jenbacher GmbH & Co OHG, 6200 Jenbach (AT)
(72) Erfinder: Fouquet, Marcel, 67434 Neustadt (DE)
(74) Vertreter: Gangl, Markus

(57) **Zusammenfassung**

Zylinderkopf (1) für eine Brennkraftmaschine (2), insbesondere Gasmotor, mit wenigstens einem im Zylinderkopf (1) ausgebildeten Hauptbrennraum (4), der sich bis zu einer Brennraumöffnung (5) in einem Zylinderkopfboden (6) des Zylinderkopfs (1) erstreckt, wobei im Zylinderkopf (1) eine Vorkammer (3) angeordnet ist, wobei der wenigstens eine Hauptbrennraum (4) über wenigstens einen Überströmkanal (7) mit der Vorkammer (3) verbunden ist.

## Beschreibung

Die Erfindung betrifft einen Zylinderkopf für eine Brennkraftmaschine, insbesondere Gasmotor, mit wenigstens einem im Zylinderkopf ausgebildeten Hauptbrennraum, der sich bis zu einer Brennraumöffnung in einem Zylinderkopfboden des Zylinderkopfs erstreckt.

Zylinderköpfe für Brennkraftmaschinen mit darin ausgebildeten Hauptbrennräumen sind bereits bekannt. So zeigt die US 4,094,272 einen Zylinderkopf für eine Brennkraftmaschine, bei dem unterhalb eines Auslassventils ein Hauptbrennraum ausgebildet ist. In Verbindung mit einem im Zylinderkopfboden ausgebildeten Strömungskanal ergeben sich während der Kompression im Kompressionstakt der Brennkraftmaschine entsprechende Turbulenzen bzw. Verwirbelungen im Hauptbrennraum, welche sich günstig auf das Verbrennungsverhalten auswirken.

Moderne Brennkraftmaschinen, insbesondere Hochleistungsgasmotoren mit großen Brennraumvolumina, werden häufig mit überstöchiometrischem Verbrennungsluftverhältnis betrieben, um die Stickoxidemissionen zu senken. Dabei weist das Brennstoff-Luft-Gemisch im Hauptbrennraum einen sehr hohen Luftüberschuss auf. Um ein solches mageres Brennstoff-Luft-Gemisch effizient zu entzünden, wird eine entsprechend hohe Zündenergie benötigt.

Aufgabe der Erfindung ist es, einen gegenüber dem Stand der Technik verbesserten Zylinderkopf anzugeben. Insbesondere soll der Zylinderkopf dafür geeignet sein, mit sehr mageren Brennstoff-Luft-Gemischen mit einem relativ großen Luftüberschuss betrieben zu werden.

Diese Aufgabe wird erfindungsgemäß dadurch gelöst, dass im Zylinderkopf eine Vorkammer angeordnet ist, wobei der wenigstens eine Hauptbrennraum über wenigstens einen Überströmkanal mit der Vorkammer verbunden ist.

Bei ottomotorisch betriebenen Brennkraftmaschinen, insbesondere bei stationären Gasmotoren, bei denen ein Treibgas-Luft-Gemisch entzündet wird, setzt man bei größeren Brennraumvolumina das Magerkonzept ein. Dies bedeutet, dass ein relativ großer Luftüberschuss vorhanden ist, wodurch bei maximaler Leistungsdichte und gleichzeitig hohem Wirkungsgrad des Motors die Schadstoffemission sowie die thermische Belastung der Bauteile möglichst gering gehalten werden. Die Zündung und Verbrennung sehr magerer Treibstoff-Luft-Gemische stellt dabei eine erhebliche Herausforderung für die Entwicklung bzw. den Betrieb moderner Hochleistungsgasmotoren dar.

Bei dem vorgeschlagenen Zylinderkopf kommt eine vom Hauptbrennraum abgeteilte Vorkammer als Zündverstärker zum Einsatz, in der das am Ende des Kompressionshubes hochverdichtete Treibstoff-Luft-Gernisch gezündet wird. Die Vorkammer ist mit dem Hauptbrennraum über einen Überströmkanal verbunden, über den Zündfackeln aus der entflammten Vorkammer in den Hauptbrennraum eindringen können und das darin befindliche Treibstoff-Luft-Gemisch effizient entzünden können. Für die Entflammung in der Vorkammer wird in dieser üblicherweise ein im Vergleich zum Hauptbrennraum fetteres Treibstoff-Luft-Gemisch bereitgestellt. So kann das Treibstoff-Luft-Gemisch in der Vorkammer beispielsweise ein Verbrennungsluftverhältnis λ von ca. 0,8 bis 0,9 aufweisen, wohingegen das magere Treibstoff-Luft-Gemisch im Hauptbrennraum ein Verbrennungsluftverhältnis λ von ca. 1,9 bis 2,0 aufweisen kann. Die Zündung in der Vorkammer kann dabei durch eine Elektrodenzündkerze, eine Laserzündkerze oder aber auch z.B. durch Koronazündung erfolgen. Durch das verhältnismäßig fette Treibstoff-Luft-Gemisch in der Vorkammer ergeben sich optimale Entflammungsbedingungen und aufgrund der Energiedichte intensive in den Hauptbrennraum austretende Zündfackeln, die zu einem raschen Durchbrennen des mageren Treibstoff-Luft-Gemischs im Hauptbrennraum führen.

Der vorgeschlagene Zylinderkopf ist insbesondere für Brennkraftmaschinen bzw. Gasmotoren mit großen Hubräumen geeignet. Durch die Ausbildung des Hauptbrennraums im Zylinderkopf kann der Hauptbrennraum verhältnismäßig kurz und kompakt gehalten werden. Durch die ebenfalls im Zylinderkopf vorgesehene Vorkammer können Zündfackeln über möglichst kurze Flammwege in diesen kompakten Hauptbrennraum eingebracht werden, diesen durchzünden und einen schnellen Ausbrand ermöglichen.

Bei herkömmlichen mit einer Vorkammer ausgestatteten Brennkraftmaschinen ragt die Vorkammer oder eine Kappe der Vorkammer üblicherweise zentral zwischen den Ventilen aus der Feuerplatte bzw. dem Zylinderkopfboden in den Hauptbrennraum. Durch die dafür erforderlichen Bohrungen im Zylinderkopfboden ist dieser konstruktiv entsprechend geschwächt. Darüber hinaus wird die Vorkammerkappe thermisch besonders hoch belastet. Dies kann zu erhöhtem Verschleiß und zu unerwünschten Glühzündungen führen.

Bei einem vorgeschlagenen Zylinderkopf kann die Vorkammer ganz im Zylinderkopf aufgenommen sein, sodass keine konstruktive Schwächung des Zylinderkopfbodens bzw. der Feuerplatte erfolgt. Insbesondere kann eine Vorkammerkappe, die in den Hauptbrennraum ragt, vermieden werden. Darüber hinaus ist es dadurch einfach möglich, Kühlvorrichtungen im Zylinderkopf vorzusehen, die im Bereich der Vorkammer und/oder des Hauptbrennraums angeordnet sind und eine effiziente Kühlung ermöglichen, ohne die Struktur des Zylinderkopfs oder des Zylinderkopfbodens zu schwächen.

Gemäß einer bevorzugten Ausführungsform kann vorgesehen sein, dass der wenigstens eine Hauptbrennraum durch ein im Zylinderkopf angeordnetes Auslassventil begrenzbar ist.

Vorzugsweise kann vorgesehen sein, dass der wenigstens eine Hauptbrennraum eine, vorzugsweise zumindest bereichsweise im Wesentlichen hemisphärisch ausgebildete, Innenwandung aufweist. Die Brennraumöffnung kann also vorzugsweise im Wesentlichen kreisförmig oder elliptisch ausgebildet sein.

Um besonders kurze Flammenwege zu ermöglichen kann ein Bereich der Innenwandung durch eine Oberfläche der Vorkammer gebildet sein.

Eine besondere Ausführungsvariante sieht vor, dass eine Tiefe des Hauptbrennraums in Bezug auf die Brennraumöffnung geringer als die Hälfte eines Durchmessers der Brennraumöffnung ist.

Um zu ermöglichen, dass eine Mehrzahl von Zündfackeln aus der Vorkammer in den Hauptbrennraum eingebracht wird, kann alternativ oder zusätzlich zu mehreren Überströmkanälen vorgesehen sein, dass an einem Ende eines Überströmkanal wenigstens eine Überströmbohrung, vorzugsweise eine Mehrzahl von Überströmbohrungen, ausgebildet ist bzw. sind, wobei die wenigstens eine Überströmbohrung in den wenigstens einen Hauptbrennraum einmündet.

Besonders vorteilhaft ist jene Ausführungsform der Erfindung, bei der im Zylinderkopfboden ein Strömungskanal in Form einer Ausnehmung ausgebildet ist, wobei der Strömungskanal einen Ventilsitz eines Einlassventils mit dem Hauptbrennraum verbindet. Dabei kann der Strömungskanal in eine Ausnehmung des üblicherweise im Wesentlichen kreisringförmig ausgebildeten Ventilsitzes münden, wobei sich diese Ausnehmung des Ventilsitzes entlang eines Umfangsbereichs des Ventilsitzes erstreckt, vorzugsweise im Bereich von etwa 10 % bis etwa 35 % des Umfangs des Ventilsitzes. Besonders günstig ist dabei, wenn der Strömungskanal außermittig, vorzugsweise im Wesentlichen tangential in Bezug auf eine Innenwandung des Hauptbrennraums, in den Hauptbrennraum einmündet. Durch einen solchen Strömungskanal können während eines Kompressionshubes entsprechende Turbulenzen bzw. Verwirbelungen im Hauptbrennraum erzeugt werden. Insbesondere wenn der Strömungskanal im Wesentlichen tangential in Bezug auf die Innenwandung des Hauptbrennraums in den Hauptbrennraum einmündet, können günstige Wirbel um eine Hochachse, die beispielsweise deckungsgleich mit der Ventilachse des Auslassventils sein kann, erzeugt werden. Durch die somit erzeugten Turbulenzen bzw. Wirbel erfolgt ein noch rascheres und damit effizienteres Durchbrennen des Treibstoff-Luft-Gemischs im Hauptbrennraum. Dies ist insbesondere beim Betrieb mit einem sehr mageren Treibstoff-Luft-Gemisch vorteilhaft, da bei zunehmender Abmagerung die Zündwilligkeit des Gemischs sinkt und sich damit der Ausbrand verschlechtert. Maßnahmen zur Erhöhung der Turbulenz führen zu höheren Strömungsgeschwindigkeiten und verbessern damit den Ausbrand des Hauptbrennraums.

Gemäß einer besonders bevorzugten Ausführung kann vorgesehen sein, dass im Zylinderkopf wenigstens eine Kühlvorrichtung angeordnet ist, vorzugsweise im Bereich zwischen dem Zylinderkopfboden und der Vorkammer und/oder im Bereich des Hauptbrennraums. Durch das Vorsehen einer Kühlung im Bereich der Vorkammer und/oder im Bereich des Hauptbrennraums kann die thermische Belastung entsprechend gesenkt werden. Darüber hinaus kann durch das Vorsehen der Vorkammer im Zylinderkopf vermieden werden, dass eine Kappe der Vorkammer in den Hauptbrennraum ragt und dort Glühzündungen auslöst.

Generell kann auch vorgesehen sein, dass der Zylinderkopf eine Mehrzahl von Hauptbrennräumen und eine Mehrzahl von Überströmkanälen aufweist, wobei jeweils ein Hauptbrennraum über jeweils wenigstens einen Überströmkanal mit der Vorkammer verbunden ist, wobei vorzugsweise die Mehrzahl von Überströmkanälen im Wesentlichen die gleiche Länge aufweisen. Weiters kann generell der Durchmesser der Überströmkanäle und/oder der Überströmbohrungen sowie die Richtung der Überströmkanäle und/oder der Überströmbohrungen in Bezug auf einen Hauptbrennraum entsprechend der gewünschten Eindringtiefe und Ausrichtung der Zündfackeln angepasst werden.

Schutz wird auch begehrt für eine Brennkraftmaschine, insbesondere einen stationären Gasmotor, mit wenigstens einem Zylinderkopf. Vorzugsweise kann dabei vorgesehen sein, dass der Zylinderkopf an einem Zylinder mit einem darin beweglichen Kolben angeordnet ist, wobei eine Kolbenstellung im oberen Totpunkt des Kolbens ein Kompressionsvolumen des Zylinders definiert, wobei der Hauptbrennraum, vorzugsweise gemeinsam mit einem gegebenenfalls vorhandenen Strömungskanal, etwa 70 % bis 95 % des Kompressionsvolumens bildet. In einer bevorzugten Ausführungsform kann vorgesehen sein, dass die Vorkammer weniger als 5 %, vorzugsweise etwa 1 % bis 2 %, des Kompressionsvolumens bildet.

Eine vorgeschlagene Brennkraftmaschine kann nach dem im Stand der Technik bekannten Miller-Kreisprozess betrieben werden. Bei Anwendung von Miller-Steuerzeiten kann die geometrische Verdichtung vorteilhaft vergrößert werden, ohne den Verdichtungsdruck zu erhöhen.

Um ein frühes Öffnen des Einlassventils bei hohem geometrischem Verdichtungsverhältnis zu erlauben, können in einer dem Zylinderkopf zugewandten Kolbenoberfläche des Kolbens wenigstens eine Vertiefung und/oder wenigstens eine Ausbuchtung ausgebildet sein (sogenannte Ventiltaschen).

In diesem Zusammenhang sieht eine besondere Ausführungsvariante vor, dass durch den im Zylinder beweglichen Kolben ein Hubraum definiert ist, wobei das Verdichtungsverhältnis, das der Summe von Hubraum und Kompressionsvolumen bezogen auf das Kompressionsvolumen entspricht, etwa 12,5 bis etwa 16 beträgt. Weitere Einzelheiten und Vorteile der vorliegenden Erfindung werden anhand der nachfolgenden Figurenbeschreibung erläutert. Dabei zeigt bzw. zeigen:
- Fig. 1: einen Querschnitt durch einen vorgeschlagenen Zylinderkopf, der an einem Zylinder einer Brennkraftmaschine angeordnet ist,
- Fig. 2: einen Querschnitt durch den Hauptbrennraum eines vorgeschlagenen Zylinderkopfs,
- Fig. 3 und 4: Querschnittsdarstellungen von weiteren Ausführungsvarianten eines vorgeschlagenen Zylinderkopfs und
- Fig. 5: eine Unteransicht auf einen vorgeschlagenen Zylinderkopf.

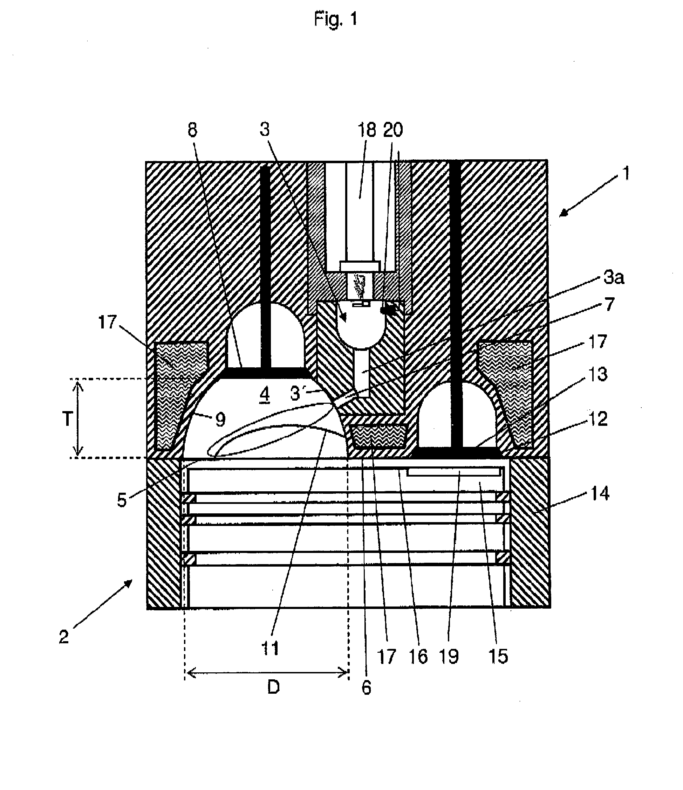

Fig. 1 zeigt einen Querschnitt durch einen vorgeschlagenen Zylinderkopf 1, der an einem Zylinder 14 einer Brennkraftmaschine 2 mit darin beweglichen Kolben 15 angeordnet ist. Im Zylinderkopf 1 ist ein Hauptbrennraum 4 ausgebildet, der eine im Wesentlichen hemisphärische Innenwandung 9 aufweist. In dieser Darstellung ist der Hauptbrennraum 4 oben durch den Ventilteller eines Auslassventils 8 begrenzt und unten mündet der Hauptbrennraum 4 über eine Brennraumöffnung 5, welche in diesem Beispiel im Wesentlichen kreisrund ausgebildet ist, in einen Innenraum des Zylinders 14. Innerhalb des Zylinders 14 bewegt sich ein Kolben 15 in bekannter Art und Weise auf und ab, wobei eine Kolbenoberfläche 16 des Kolbens 15 bei Erreichen des oberen Totpunktes des Kolbens 15 einen nur sehr geringen Abstand zum Zylinderkopfboden 6 des Zylinderkopfs 1 bzw. zum Ventilteller eines im Zylinderkopf 1 angeordneten Einlassventils 13 aufweist. Dieser geringe Abstand reicht jedoch aus, um für einen Ansaugtakt das Einlassventil 13 zu öffnen. Hierfür können in der Kolbenoberfläche 16 des Kolbens 15 Ventiltaschen bzw. Vertiefungen 19 ausgebildet sein.

Die Tiefe T des Hauptbrennraums 4 in Bezug auf die Brennraumöffnung bzw. eine gedachte Ebene des Zylinderkopfbodens 6 ist in diesem Beispiel kleiner als die Hälfte des Durchmessers D der Brennraumöffnung 5.

Im Zylinderkopf 1 ist eine Vorkammer 3 angeordnet. Die Vorkammer 3 weist eine äußere Oberfläche 3' auf, die einen Bereich der Innenwandung 9 des Hauptbrennraums 4 bildet. Die Vorkammer 3 umfasst einen im Wesentlichen rotationssymmetrisch ausgebildeten vorkammerhals 3a. Ein oder mehrere Überströmkanäle 7 verbindet bzw. verbinden den Hauptbrennraum 4 und die Vorkammer 3 bzw. deren Vorkammerhals 3a, sodass durch eine Zündung eines Treibstoff-Luft-Gemischs in der Vorkammer 3 Zündfackeln über den bzw. die Überströmkanäle 7 in den Hauptbrennraum 4 eindringen und ein Treibstoff-Luft-Gemisch im Hauptbrennraum 4 zünden können. Die Vorkammer 3 ist mit einer Zündvorrichtung ausgestattet, um das in der Vorkammer 3 befindliche Treibstoff-Luft-Gemisch zu zünden. Dabei ist es vorteilhaft, wenn die Zündvorrichtung - wie im gezeigten Beispiel - im Wesentlichen gegenüber dem wenigstens einen Überströmkanal 7 in der Vorkammer 3 angeordnet ist. Die Zündung des Treibstoff-Luft-Gemischs in der Vorkammer 3 erfolgt im gezeigten Beispiel durch eine Elektrodenzündkerze 18.

Im Bereich des Hauptbrennraums 4 und der Vorkammer 3 sind im Zylinderkopf 1 mehrere Kühlvorrichtungen 17 in Form von Kühlkanälen vorgesehen, die von einem Kühlmedium, beispielsweise Wasser, durchströmbar sind. Durch die Kühlvorrichtungen 17 erfolgt eine vorteilhafte Kühlung von Vorkammer 3 und Hauptbrennraum 4.

Am Zylinderkopfboden 6 ist in diesem Beispiel ein Strömungskanal 11 in Form einer Ausnehmung ausgebildet. Dieser Strömungskanal 11 verbindet den Ventilsitz 12 des im Zylinderkopf 1 angeordneten Einlassventils 13 mit dem Hauptbrennraum 4. Die Tiefe dieser Ausnehmung bzw. des Strömungskanals 11 in Bezug auf den sonst im Wesentlichen eben ausgebildeten Zylinderkopfboden 6 nimmt dabei in Richtung des Hauptbrennraums 4 zu. In Verbindung mit einer Ausgestaltung des Strömungskanals 11. sodass dieser im Wesentlichen tangential in Bezug auf die Innenwandung 9 des Hauptbrennraums 4 in den Hauptbrennraum 4 mündet, ergeben sich vorteilhafte Turbulenzen bzw. Verwirbelungen eines in den Hauptbrennraum 4 einströmenden Treibstoff-Luft-Gemischs während eines Kompressionshubes. Durch somit ermöglichte Wirbel um eine Hochachse des Hauptbrennraums 4 kann ein noch rascheres und damit effizienteres Durchbrennen des Treibstoff-Luft-Gemischs erzielt werden.

Die Einbringung von Treibstoff oder von einem Treibstoff-Luft-Gemisch in den wenigstens einen Hauptbrennraum 4 und in die wenigstens eine Vorkammer 3 kann durch im Stand der Technik bekannte Vorrichtungen erfolgen. So kann Treibstoff oder ein Treibstoff-Luft-Gemisch über das in einem Einlasstrakt des Zylinderkopfs 1 angeordnete Einlassventil 13 in den Hauptbrennraum 4 eingebracht werden. Während des Kompressionstaktes strömt ein Teil des im wenigstens einen Hauptbrennraum 4 befindlichen Treibstoff-Luft-Gemischs in bekannter Weise über den wenigstens einen Überströmkanal 7 in die Vorkammer 3. Um das in der Vorkammer 3 befindliche Treibstoff-Luft-Gemisch anzufetten, kann zusätzlicher Treibstoff über eine entsprechende, im Stand der Technik bekannte, Treibstoffdosiereinrichtung 20 (z.B. in Form eines Vorkammergasventils) in die Vorkammer 3 eingebracht werden. Dabei ist es vorteilhaft, wenn das Verbrennungsluftverhältnis des in der Vorkammer 3 befindlichen Treibstoff-Luft-Gemischs niedriger ist als das Verbrennungsluftverhältnis des im wenigstens einen Hauptbrennraum 4 befindlichen Treibstoff-Luft-Gemischs. Besonders vorteilhaft ist es, wenn das Verbrennungsluftverhältnis des im wenigstens einen Hauptbrennraum 4 befindlichen Treibstoff-Luft-Gemischs größer 1,8 ist, vorzugsweise etwa 1,9 bis etwa 2,2 beträgt, besonders bevorzugt etwa 1,9 bis etwa 2,0 beträgt und wenn das Verbrennungsluftverhältnis des in der Vorkammer 3 befindlichen Treibstoff-Luft-Gemischs kleiner 1 ist, vorzugsweise etwa 0,6 bis etwa 0,9 beträgt, besonders bevorzugt etwa 0,8 bis etwa 0,9 beträgt.

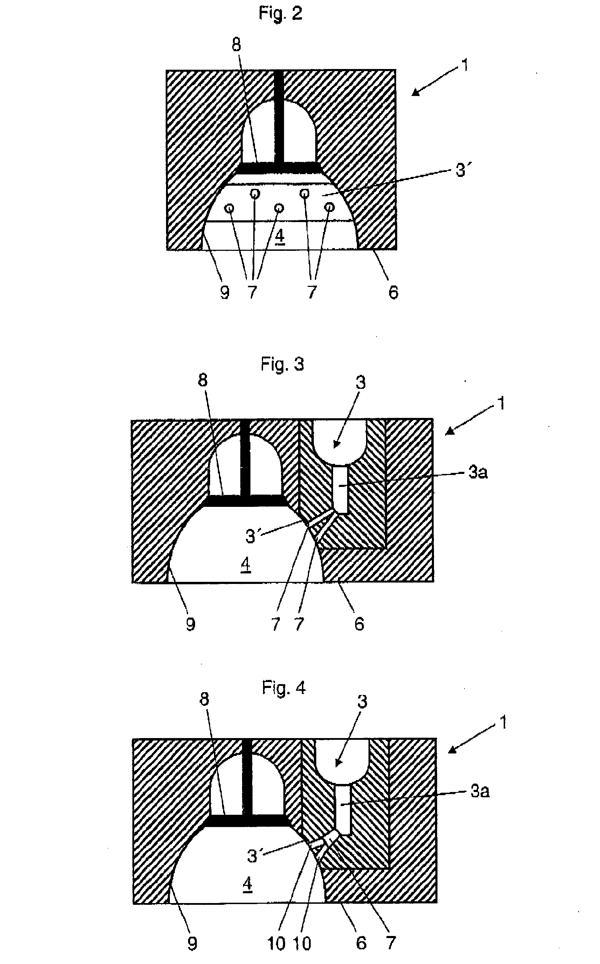

Fig. 2 zeigt eine Schnittdarstellung durch einen vorgeschlagenen Zylinderkopf 1 mit einer Blickrichtung ausgehend vom Hauptbrennraum 4 auf eine Oberfläche 3' der Vorkammer 3, wobei die Oberfläche 3' einen Teil der Innenwandung 9 des Hauptbrennraums 4 bildet. In dieser Darstellung sind deutlich mehrere Überströmkanäle 7 zu erkennen, die jeweils den Hauptbrennraum 4 mit der Vorkammer 3 verbinden. Dadurch können die Anzahl und Ausrichtungen der in den Hauptbrennraum 4 eintretenden Zündfackeln festgelegt werden.

Fig. 3 zeigt eine weitere Schnittdarstellung durch einen Teil eines vorgeschlagenen Zylinderkopfs 1 ähnlich der Fig. 1. Hier sind ebenfalls mehrere Überströmkanäle 7 gezeigt, die jeweils den Hauptbrennraum 4 mit der Vorkammer 3 bzw. deren Vorkammerhals 3a verbinden. Die Summe aller Querschnittsflächen der vom Vorkammerhals 3a in den Hauptbrennraum 4 einmündenden Überströmkanäle 7 kann dabei im Wesentlichen gleich der Querschnittsfläche des Vorkammerhalses 3a sein.

Fig. 4 zeigt ein weiteres Ausführungsbeispiel eines vorgeschlagenen Zylinderkopfs 1 in einer Darstellung gemäß Fig. 3. In dieser Abbildung ist ein Überströmkanal 7 zu erkennen, der den Hauptbrennraum 4 mit der Vorkammer 3 bzw. deren Vorkammerhals 3a verbindet. Am dem Hauptbrennraum 4 zugewandten Ende des gezeigten Überströmkanals 7 sind in diesem Fall zwei Überströmbohrungen 10 ausgebildet, die jeweils in den Hauptbrennraum 4 münden. Dadurch können alternativ oder zusätzlich zum Vorsehen von mehreren Überströmkanälen 7 ebenfalls die Anzahl und Ausrichtungen der in den Hauptbrennraum 4 eintretenden Zündfackeh festgelegt werden. Generell können mit einer solchen Ausbildung eines Endes eines Überströmkanals 7 durch die Überströmbohrungen 10 Verästelungen gebildet werden.

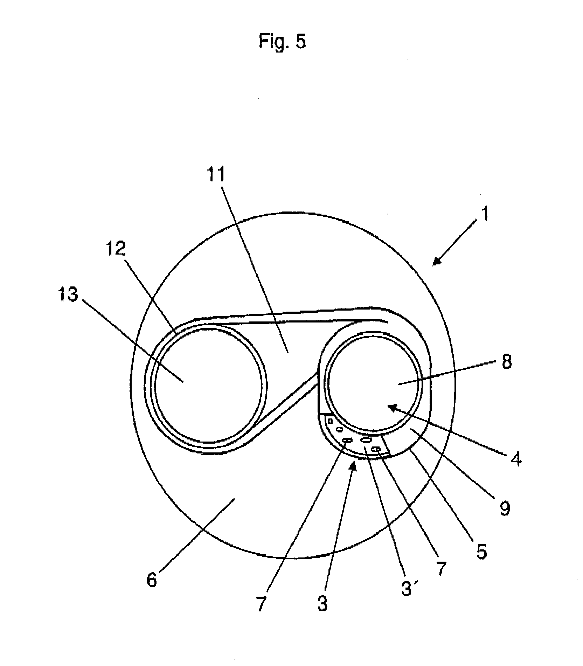

Fig. 5 zeigt eine Unteransicht auf einen vorgeschlagenen Zylinderkopf 1 mit Blickrichtung auf den Zylinderkopfboden 6 des Zylinderkopfs 1. Im Zylinderkopf 1 ist ein Hauptbrennraum 4 ausgebildet, der eine im Wesentlichen elliptische Brennraumöffnung 5 am Zylinderkopfboden 6 aufweist. Am der Brennraumöffnung 5 entgegengesetzten Ende ist der Hauptbrennraum 4 durch ein Auslassventil 8 begrenzt. Ein Teil der Innenwandung 9 des Hauptbrennraums 4 ist durch eine Oberfläche 3' einer im Zylinderkopf 1 angeordneten Vorkammer 3 gebildet. Mehrere Überströmkanäle 7 münden von der hier nicht näher ersichtlichen Vorkammer 3 über die Oberfläche 3' der Vorkammer 3 in den Hauptbrennraum 4. Im Zylinderkopfboden 6 ist ein Strömungskanal 11 in Form einer Ausnehmung ausgebildet, wobei der Strömungskanal 11 einen Ventilsitz 12 eines Einlassventils 13 mit dem Hauptbrennraum 4 verbindet. Der Strömungskanal 11 mündet im Wesentlichen tangential in Bezug auf die Innenwandung 9 in den Hauptbrennraum 4 und die Tiefe des Strömungskanals 11 in Bezug auf den Zylinderkopfboden 6 nimmt in Richtung des Hauptbrennraums 4 zu. Dadurch lassen sich für eine Durchzündung des Hauptbrennraums 4 vorteilhafte Verwirbelungen bzw. Turbulenzen eines während des Kompressionshubs in den Hauptbrennraum 4 einströmenden Treibstoff-Luft-Gemisch erreichen.

## Patentansprüche

1. Zylinderkopf (1) für eine Brennkraftmaschine (2), insbesondere Gasmotor, mit wenigstens einem im Zylinderkopf (1) ausgebildeten Hauptbrennraum (4), der sich bis zu einer Brennraumöffnung (5) in einem Zylinderkopfboden (6) des Zylinderkopfs (1) erstreckt, **dadurch gekennzeichnet, dass** im Zylinderkopf (1) eine Vorkammer (3) angeordnet ist, wobei der wenigstens eine Hauptbrennraum (4) über wenigstens einen Überströmkanal (7) mit der Vorkammer (3) verbunden ist.

2. Zylinderkopf nach Anspruch 1, **dadurch gekennzeichnet, dass** die Vorkammer (3) mit einer Zündvorrichtung ausgestattet ist, vorzugsweise mit einer Elektrodenzündkerze (18) oder einer Laserzündkerze, wobei vorzugsweise die Zündvorrichtung im Wesentlichen gegenüber dem wenigstens einen Überströmkanal (7) in der Vorkammer (3) angeordnet ist.

3. Zylinderkopf nach Anspruch 1 oder 2, **dadurch gekennzeichnet, dass** ein im wenigstens einen Hauptbrennraum (4) befindliches Treibstoff-Luft-Gemisch durch aus dem wenigstens einen Überströmkanal (7) austretende Zündfackeln entzündbar ist.

4. Zylinderkopf nach Anspruch 3, **dadurch gekennzeichnet, dass** das im wenigstens einen Hauptbrennraum (4) befindliche Treibstoff-Luft-Gemisch ein überstöchiometrisches Verbrennungsluftverhältnis aufweist, wobei vorzugsweise das Verbrennungsluftverhältnis des im wenigstens einen Hauptbrennraum (4) befindlichen Treibstoff-Luft-Gemischs größer 1,8 ist, vorzugsweise etwa 1,9 bis etwa 2,2 beträgt, besonders bevorzugt etwa 1,9 bis etwa 2,0 beträgt.

5. Zylinderkopf nach Anspruch 3 oder 4, **dadurch gekennzeichnet, dass** das Verbrennungsluftverhältnis eines in der Vorkammer (3) befindlichen Treibstoff-Luft-Gemischs niedriger ist als das Verbrennungsluftverhältnis des im wenigstens einen Hauptbrennraum (4) befindlichen Treibstoff-Luft-Gemischs, wobei vorzugsweise das Verbrennungsluftverhältnis des in der Vorkammer (3) befindlichen Treibstoff-Luft- Gemischs kleiner 1 ist, vorzugsweise etwa 0,6 bis etwa 0,9 beträgt, besonders bevorzugt etwa 0,8 bis etwa 0,9 beträgt.

6. Zylinderkopf nach einem der Ansprüche 1 bis 5, **dadurch gekennzeichnet, dass** der wenigstens eine Hauptbrennraum (4) durch ein im Zylinderkopf (1) angeordnetes Auslassventil (8) begrenzbar ist.

7. Zylinderkopf nach einem der Ansprüche 1 bis 6, **dadurch gekennzeichnet, dass** der wenigstens eine Hauptbrennraum (4) eine, vorzugsweise zumindest bereichsweise im Wesentlichen hemisphärisch ausgebildete, Innenwandung (9) aufweist, wobei vorzugsweise ein Bereich der Innenwandung (9) durch eine Oberfläche (3') der Vorkammer (3) gebildet ist.

8. Zylinderkopf nach einem der Ansprüche 1 bis 7, **dadurch gekennzeichnet, dass** die Brennraumöffnung (5) im Wesentlichen kreisförmig oder elliptisch ausgebildet ist, wobei vorzugsweise eine Tiefe (T) des Hauptbrennraums (4) in Bezug auf die Brennraumöffnung (5) geringer als die Hälfte eines Durchmessers (D) der Brennraumöffnung (5) ist.

9. Zylinderkopf nach einem der Ansprüche 1 bis 8, **dadurch gekennzeichnet, dass** an einem Ende des Überströmkanals (7) wenigstens eine Überströmbohrung (10), vorzugsweise eine Mehrzahl von Überströmbohrungen (10), ausgebildet ist bzw. sind, wobei die wenigstens eine Überströmbohrung (10) in den wenigstens einen Hauptbrennraum (4) einmündet.

10. Zylinderkopf nach einem der Ansprüche 1 bis 9, **dadurch gekennzeichnet, dass** im Zylinderkopfboden (6) ein Strömungskanal (11) in Form einer Ausnehmung ausgebildet ist, wobei der Strömungskanal (11) einen Ventilsitz (12) eines Einlassventils (13) mit dem Hauptbrennraum (4) verbindet, wobei vorzugsweise der Strömungskanal (11) außermittig, vorzugsweise im Wesentlichen tangential in Bezug auf eine Innenwandung (9) des Hauptbrennraums (4), in den Hauptbrennraum (4) einmündet.

11. Zylinderkopf nach einem der Ansprüche 1 bis 10, **dadurch gekennzeichnet, dass** im Zylinderkopf (1) wenigstens eine Kühlvorrichtung (17) angeordnet ist, vorzugsweise im Bereich zwischen dem Zylinderkopfboden (6) und der Vorkammer (3) und/oder im Bereich des Hauptbrennraums (4).

12. Zylinderkopf nach einem der Ansprüche 1 bis 11, **dadurch gekennzeichnet, dass** der Zylinderkopf (1) eine Mehrzahl von Hauptbrennräumen (4) und eine Mehrzahl von Überströmkanälen (7) aufweist, wobei jeweils ein Hauptbrennraum (4) über jeweils wenigstens einen Überströmkanal (7) mit der Vorkammer (3) verbunden ist.

13. Brennkraftmaschine (2), insbesondere stationärer Gasmotor, mit wenigstens einem Zylinderkopf (1) nach einem der Ansprüche 1 bis 12.

14. Brennkraftmaschine nach Anspruch 13, **dadurch gekennzeichnet, dass** der Zylinderkopf (1) an einem Zylinder (14) mit einem darin beweglichen Kolben (15) angeordnet ist, wobei eine Kolbenstellung im oberen Totpunkt des Kolbens (15) ein Kompressionsvolumen des Zylinders (14) definiert, wobei der Hauptbrennraum (4), vorzugsweise gemeinsam mit einem gegebenenfalls vorhandenen Strömungskanal (11), etwa 70 % bis 95 % des Kompressionsvolumens bildet, wobei vorzugsweise die Vorkammer (3) weniger als 5 %, vorzugsweise etwa 1 % bis 2 %, des Kompressionsvolumens bildet.

15. Brennkraftmaschine nach Anspruch 13 oder 14, **dadurch gekennzeichnet, dass** in einer dem Zylinderkopf (1) zugewandten Kolbenoberfläche (16) des Kolbens (15) wenigstens eine Vertiefung (19) und/oder wenigstens eine Ausbuchtung ausgebildet ist bzw. sind.
